# EUROPEAN PATENT APPLICATION

(11) **EP 4 625 789 A1**
(43) Date of publication of application: **01.10.2025**
(21) Application number: 25164876.2
(22) Date of filing: 19.03.2025
(51) Int. Cl.: H02M 1/00

(54) **MULTI-OBJECTIVE AUTO-TUNING FOR POWER CONTROLLERS**

(30) Priority: 25.03.2024 US 202463569641 P; 17.03.2025 US 202519081872
(71) Applicant: Analog Devices, Inc., Wilmington, MA 01887 (US)
(72) Inventor: LU, Wenjie, Wilmington 01887 (US); AL DUJAILI, Abdullah Shamil Hashim, Wilmington 01887 (US); CHU, Cecilia China, Wilmington 01887 (US); YU, Tao, Wilmington 01887 (US)
(74) Representative: Yang, Shu

(57) **Abstract**

Systems and methods are provided for operating one or more power converters. The systems and methods extract a plurality of metrics from an output of a power supply and obtain a plurality of objectives and/or constraints of an optimization function. The systems and methods automatically generate a solution to the optimization function based on the plurality of metrics extracted from the output of the power supply, the solution comprising one or more compensation parameters. The systems and methods automatically modify one or more tunable parameters of the power supply based on the one or more compensation parameters of the automatically generated solution to the optimization function.

## Description

### CROSS-REFERENCE TO RELATED APPLICATION

This is a non-provisional and claims the benefit of U.S. Prov. Application No. 63/569,641, filed March 25, 2024, which is hereby incorporated by reference herein in its entirety.

### FIELD OF THE DISCLOSURE

This document pertains generally, but not by way of limitation, to power converter systems, such as power supplies.

### BACKGROUND

Power converters are essential components in electronic systems. These devices can transform AC to DC, DC to AC, or even modify the voltage and current levels within the same type of electrical power. Setting the parameters of power converters is a critical process to ensure the power converter operates efficiently, safely, and in harmony with the connected load.

### OVERVIEW

This disclosure describes, among other things, techniques for controlling power converters.

In some aspects, the techniques described herein relate to a power converter system including: a power supply including a plurality of tunable parameters; and control circuitry configured to perform operations including: extracting a plurality of metrics from an output of the power supply; obtaining a plurality of objectives of an optimization function; automatically generating a solution to the optimization function based on the plurality of metrics extracted from the output of the power supply, the solution including one or more compensation parameters; and automatically modifying the plurality of tunable parameters of the power supply based on the one or more compensation parameters of the automatically generated solution to the optimization function. "Tunable parameters" and "compensation parameters" are used interchangeably throughout and should be understood to have the same meaning.

**In** some aspects, the techniques described herein relate to a power converter system, wherein an individual objective of the plurality of objectives of the optimization function includes safety parameters.

**In** some aspects, the techniques described herein relate to a power converter system, wherein the solution to the optimization function excludes a set of values for a set of compensation parameters that cause damage to the power supply.

**In** some aspects, the techniques described herein relate to a power converter system, wherein the plurality of metrics includes at least one of a minimum voltage excursion, a gain bandwidth, a phase margin, or a gain margin.

In some aspects, the techniques described herein relate to a power converter system, wherein the plurality of metrics is extracted from a Bode plot associated with the power supply.

In some aspects, the techniques described herein relate to a power converter system, wherein the plurality of metrics is extracted from a voltage transient response associated with the power supply.

In some aspects, the techniques described herein relate to a power converter system, wherein the plurality of objectives includes at least one of a target output voltage, a target overshoot amount, a target undershoot amount, a target transient response, target gain bandwidth, or a target phase margin.

In some aspects, the techniques described herein relate to a power converter system, wherein the plurality of tunable parameters of the power supply correspond to a stable operating region of the power supply, and wherein the plurality of metrics are extracted while the power supply operates in the stable operating region.

In some aspects, the techniques described herein relate to a power converter system, wherein a first of the plurality of tunable parameters includes a first type of value, and wherein a second of the plurality of tunable parameters includes a second type of value.

In some aspects, the techniques described herein relate to a power converter system, wherein the operations include generating a first list of possible values corresponding to the first type of value and generating a second list of possible values corresponding to the second type of value.

In some aspects, the techniques described herein relate to a power converter system, wherein the first type of value includes a string, and wherein the second type of value includes a Boolean, floating point, or integer value.

In some aspects, the techniques described herein relate to a power converter system, wherein automatically generating the solution to the optimization function includes accessing a first set of compensation parameters corresponding to a stable operating region for the power supply and adjusting the first set of compensation parameters by a specified amount to generate a second set of compensation parameters.

In some aspects, the techniques described herein relate to a power converter system, wherein the operations include verifying whether the second set of compensation parameters satisfy the plurality of objectives of the optimization function without causing damage to the power supply.

In some aspects, the techniques described herein relate to a power converter system, wherein the output of the power supply is a first output corresponding to the first set of compensation parameters, wherein the operations include: determining that the second set of compensation parameters satisfy the plurality of objectives of the optimization function; in response to determining that the second set of compensation parameters satisfies the plurality of objectives of the optimization function, applying the second set of compensation parameters to the power supply; generating a second output of the power supply corresponding to the second set of compensation parameters; and, determining which of the first output and the second output of the power supply is closer to a target objective of the optimization function.

In some aspects, the techniques described herein relate to a power converter system, wherein the operations include: computing a first deviation between the first output and the target objective; computing a second deviation between the second output and the target objective; and determining that the first output is closer to the target objective in response to determining that the second deviation is greater than the first deviation.

In some aspects, the techniques described herein relate to a power converter system, wherein the operations include: in response to determining that the first output is closer to the target objective, adjusting the first set of compensation parameters corresponding to the first output by a different specified amount to generate a third set of compensation parameters.

In some aspects, the techniques described herein relate to a power converter system, wherein the operations include: in response to determining that the second output is closer to the target objective, adjusting the second set of compensation parameters corresponding to the second output by the specified amount to generate a third set of compensation parameters.

In some aspects, the techniques described herein relate to a power converter system, wherein automatically generating the solution to the optimization function includes processing the optimization function according to at least one of simultaneous optimistic optimization (SOO), greedy random walk, or hill climbing optimization.

In some aspects, the techniques described herein relate to a method including: extracting a plurality of metrics from an output of a power supply; obtaining a plurality of objectives and/or constraints of an optimization function; automatically generating a solution to the optimization function based on the plurality of metrics extracted from the output of the power supply, the solution including one or more compensation parameters; and, automatically modifying one or more tunable parameters of the power supply based on the one or more compensation parameter values of the automatically generated solution to the optimization function.

In some aspects, the techniques described herein relate to a non-transitory computer readable medium including computer readable instructions that, when executed by one or more processors, configure the one or more processors to perform operations including: extracting a plurality of metrics from an output of a power supply; obtaining a plurality of objectives and/or constraints of an optimization function; automatically generating a solution to the optimization function based on the plurality of metrics extracted from the output of the power supply, the solution including one or more compensation parameters; and automatically modifying one or more tunable parameters of the power supply based on the one or more compensation parameters of the automatically generated solution to the optimization function.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various examples discussed in the present document.
**FIG. 1** is a block diagram of an example of a power converter system, in accordance with various examples.
**FIG. 2** is a block diagram of an illustration of solving an optimization function according to SOO, in accordance with various examples.
**FIG. 3** is a block diagram of an illustration of solving an optimization function according to hill climbing optimization, in accordance with various examples.
**FIGS. 4-5** are block diagrams of an illustration of solving an optimization function according to according to greedy random walk (GRW) optimization, in accordance with various examples.
**FIG. 6** is a flow diagram depicting an example process for operating a power converter system, in accordance with various examples.
**FIG. 7** is a block diagram illustrating an example of a machine upon which one or more examples may be implemented.

### DETAILED DESCRIPTION

Power converters are essential components in electronic systems, enabling the conversion of electrical power from one form to another and/or generation of power to meet specific requirements of the load they are powering. These devices can transform AC to DC, DC to AC, or even modify the voltage and current levels within the same type of electrical power. Setting the parameters of power converters is a critical process that involves configuring various operational aspects such as output voltage, current limits, switching frequency, and control loop parameters, among others. Proper parameter setting ensures the power converter operates efficiently, safely, and in harmony with the connected load, thereby optimizing performance and extending the lifespan of both the converter and the load.

In each power supply system, there are requirements for both output voltage transients (e.g., minimum voltage excursion), and for the close-loop AC responses (e.g., sufficient phase margin). Modern power supply integrated circuits (ICs) often have controllers with loop compensation networks which can be tuned to optimize the performance of the power supplies. However, there are two challenges in conventional loop tuning. Specifically, there can be many tunable parameters and there can be several metrics to be tuned, often compromising each other. As such, tuning power supply or power converters is conventionally a manual process which is tedious and time-consuming and often leads to non-optimal results.

Achieving optimal compensation in power converters often involves navigating trade-offs between stability, performance, and efficiency. For instance, increasing the bandwidth of the control loop can improve transient response but may also introduce stability issues or increase susceptibility to noise. Similarly, designing for maximum efficiency might compromise performance under certain operating conditions. Identifying the optimal balance requires a deep understanding of the system's behavior and the ability to evaluate the impact of different compensation strategies on overall system performance.

External factors such as temperature, humidity, and electromagnetic interference (EMI) can also pose challenges to setting optimal compensation parameters. These conditions can affect both the power converter's components and its control systems, leading to deviations from expected performance. Designing compensation strategies that are resilient to such environmental and operational variations is crucial for ensuring reliable performance in real-world applications which is tedious and time consuming. Compensation parameters that are optimal for one set of conditions may not be suitable for others. Finding the right set of compensation parameters is a daunting task which consumes a great deal of resources and time.

According to the disclosed examples, novel and resource efficient approaches to automatically generating compensation parameters for power converter systems (e.g., power supplies) are provided. The disclosed approach defines an optimization function or optimization problem for the power converter system that includes a plurality of objectives. The disclosed approach extracts a set of metrics from the power converter system that is associated with a stable set of compensation parameters and automatically searches for an optimal set of compensation parameters based on that stable set of compensation parameters. Namely, the disclosed approach iteratively perturbs different sets of the compensation parameters by a specified amount (e.g., which can be a minimal amount) to test operation of the power converter system using the different set of the compensation parameters. Each set of compensation parameters is generated from the stable set of compensation parameters (or derived from other parameters that were generated from that stable set) which ensures that a potential configuration avoids damaging the power converter system.

In this way, the optimal set of compensation parameters can be automatically computed and generated using a minimal set of interactions and queries to the power converter system. This reduces the amount of manual user involvement and time-consuming process of determining the compensation parameters which improves the overall efficiency of designing and operating a power converter system.

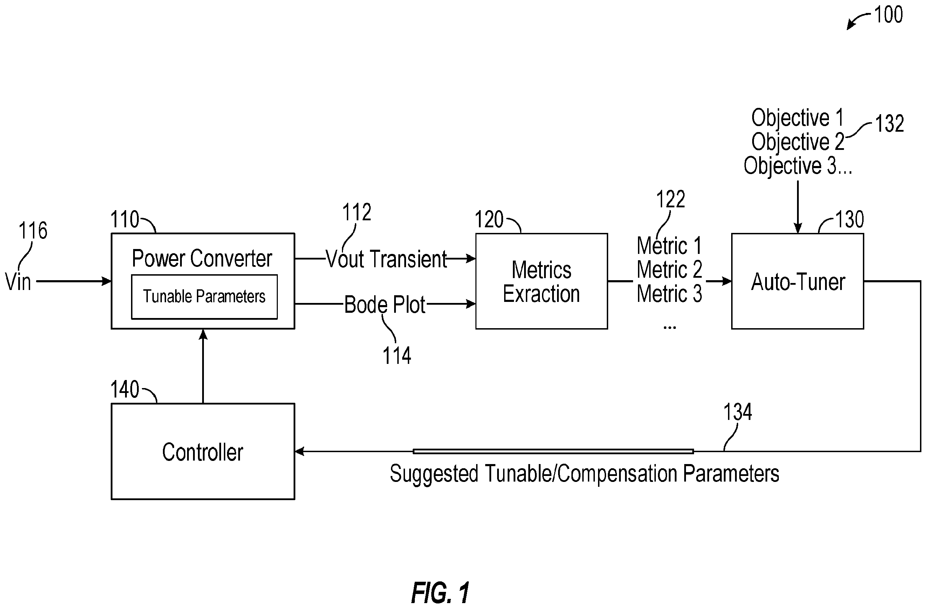

**FIG. 1** is a block diagram of an example of a power converter system 100, in accordance with various examples. The power converter system 100 includes a power converter 110 (e.g., a power supply), a metrics extraction component 120, an auto-tuner component 130, and a controller 140. Although the components shown in power converter system 100 are drawn as separate components, they can all be implemented by a single component. For example, the controller 140 can implement the functionality of the metrics extraction component 120 and/or the auto-tuner component 130.

In some examples, the power converter 110 includes a plurality of tunable parameters. In order to configure or adjust the tunable parameters of the power converter 110, an interface can be provided. The interface can be accessed through a graphical user interface coupled to the power converter 110. In some cases, the interface can be accessed by the controller 140. The interface (e.g., an ethernet connection or other serial or parallel physical connection) can be configured to receive a set of instructions that specify the different values for each of the tunable parameters. In some cases, one tunable parameter can be defined by a first type of data, such as a string and another tunable parameter can be defined by a second type of data, such as a floating point value, an integer value, and/or a Boolean value. The interface can specify the values for each of the tunable parameters. In response to receiving the values for each of the tunable parameters via the interface, the power converter 110 adjusts the tunable parameters and the output of the power converter 110 is generated using the adjusted tunable parameters. These parameters can be used to set the switching frequency, voltage and current limits, compensation, and/or control loop gains.

The power converter 110 can be accompanied by proprietary software that allows users and/or the controller 140 to connect to the converter via a communication port (e.g., USB, RS-232, Ethernet, Power Management Bus (PMBus), and so forth) and adjust parameters through a graphical user interface. In some cases, the power converter 110 offers short or long-range wireless connectivity and can be adjusted using mobile applications, providing a convenient way to make changes wirelessly, especially in hard-to-reach installations. In some cases, the power converter 110 can communicate with the controller 140 via protocols like RS-232, RS-485, and CAN allowing for the remote adjustment of parameters. In some cases, the power converter 110 can communicate with the controller 140 wirelessly.

The power converter 110 can receive an input voltage 116 and can generate an output based on that input voltage 116. In some cases, the output generated by the power converter 110 can be controlled by modifying one or more of the tunable parameters. The output generated by the power converter 110 can include a voltage output transient response 112 and/or a Bode plot 114.

In some examples, the metrics extraction component 120 obtains the output from the power converter 110. The metrics extraction component 120 processes the output to generate a set of metrics 122. The set of metrics 122 can include any measurable property of the output of the power converter 110. For example, the set of metrics 122 can include voltage metrics (e.g., the average value of the output voltage and/or variation or fluctuation of the output voltage over type measured in peak-to-peak), current metrics (e.g., the average output current or variation in the output current over time), conversion efficiency, power loss, transient response, stability margins, operating temperature, thermal resistance, overvoltage protection information, overcurrent protection information, short circuit protection information, conducted emissions (e.g., level of electrical noise conduced back into the power source), radiated emissions (e.g., the level of electromagnetic radiation emitted by the converter), and/or mean time between failures (e.g., an estimated expected operational lifespan of the converter).

The set of metrics 122 can be provided to the auto-tuner component 130. The auto-tuner component 130 can access a set of objectives 132 of an objective function. The set of objectives and/or constraints 132 can include a target value corresponding to the set of metrics 122. For example, the set of objectives 132 can include target voltage metrics, target current metrics, target conversion efficiency, target power loss, target transient response, target stability margins, target operating temperature, target thermal resistance, target overvoltage protection, target overcurrent protection, target short circuit protection, target conducted emissions (e.g., level of electrical noise conduced back into the power source), target radiated emissions (e.g., the level of electromagnetic radiation emitted by the converter), and/or target mean time between failures (e.g., an estimated expected operational lifespan of the converter). The objectives also include constraints. For example, safe/stability constraints, for example, the phase margin cannot be below a certain threshold.

The auto-tuner component 130 can implement any type of objective problem or objective function solver to generate a new set of compensation parameters given the set of metrics 122 and the set of objectives 132. In some cases, the auto-tuner component 130 solves the optimization function using any one or combination of SOO, hill climbing optimization, and/or GRW, discussed below. In some examples, the auto-tuner component 130 obtains a current set of compensation parameters of the power converter 110 (representing a stable set of compensation parameters) and can generate the new set of compensation parameters by perturbing or modifying the current set of compensation parameters by a specified maximum or minimum amount. This avoids generating compensation parameters that can damage the power converter 110. In some cases, the auto-tuner component 130 maintains or stores the values of the compensation parameters of each iteration of generating new compensation parameters so that the auto-tuner component 130 can backtrack. For example, the auto-tuner component 130 can store an association between a first set of compensation parameters and a first output of the power converter 110.

The auto-tuner component 130 generates the new set of compensation parameters 134 and provides that new set of compensation parameters 134 to the controller 140. The controller 140 can generate a set of instructions and send those instructions to the power converter 110. The set of instructions can cause the power converter 110 to replace the current set of compensation parameters with the new set of compensation parameters 134 generated by the auto-tuner component 130. The power converter 110 can then operate according to the new set of compensation parameters 134. The output of the power converter 110 can be obtained by the metrics extraction component 120 can used to generate a new set of metrics 122. The auto-tuner component 130 can store an association between a second set of compensation parameters corresponding to the new set of compensation parameters 134 and a second output of the power converter 110 corresponding to the output that is measured based on application of the second set of compensation parameters.

The auto-tuner component 130 can evaluate whether the set of metrics 122 of a prior iteration resulted in a more optimal output of the power converter 110 relative to the current output of the power converter 110. Based on that analysis, the auto-tuner component 130 can either generate a third set of compensation parameters using the first set of compensation parameters (e.g., of the prior iteration) or the second set of compensation parameters (e.g., of the current iteration). This process is repeated by the auto-tuner component 130 until the optimal set of compensation parameters is found or until a stopping criterion is reached.

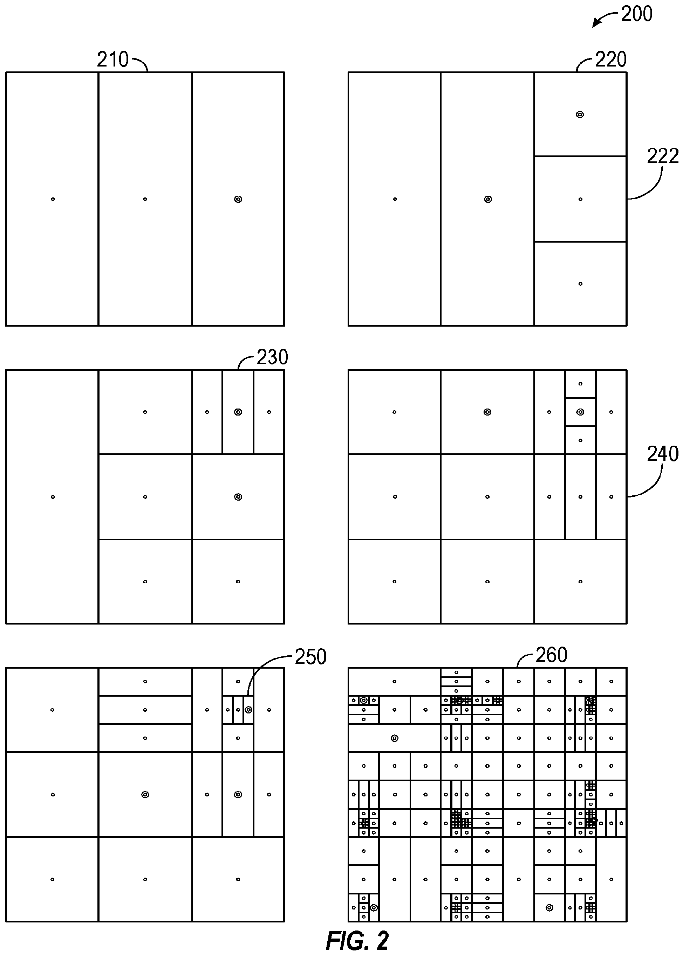

**FIG. 2** is a block diagram 200 of an illustration of solving an optimization function according to SOO, in accordance with various examples. At its core, SOO operates on the principle of optimism in the face of uncertainty. This means that the algorithm maintains an optimistic stance towards unexplored regions of the search space, hypothesizing that these areas might contain the global optimum or solutions superior to those already discovered. This optimistic exploration is counterbalanced by the exploitation of known promising areas, where the algorithm refines its search based on previously gathered information to improve upon existing solutions.

SOO divides the search space into a hierarchical partitioning, where each partition or node represents a subset of the search space. The algorithm then iteratively selects and expands nodes based on an optimistic estimate of their potential to contain the optimum solution. This selection process is guided by an upper confidence bound that represents the optimistic estimate of the maximum value that could be obtained from a given node. By expanding the most promising nodes, SOO simultaneously explores new regions of the search space (exploration) and refines its search in areas already identified as promising (exploitation).

Specifically, the auto-tuner component 130 of FIG. 1 can access or receive a current set of compensation parameters from the power converter 110 of FIG. 1. The auto-tuner component 130 can determine that the current set of compensation parameters corresponds to a particular region 210 (shown by the large dot) in a set of possible compensation parameter regions. The auto-tuner component 130 can divide the particular region 210 into a subset of regions 220 and 222. Each of the subset of regions 220 and 222 can represent a different set of compensation parameters that are generated by perturbing the current set of compensation parameters by a specified amount.

At each iteration, the auto-tuner component 130 can instruct the controller 140 to reconfigure the power converter 110 to operate according to the new set of compensation parameters. The auto-tuner component 130 can receive the output of the power converter 110 operating according to the new set of compensation parameters. The auto-tuner component 130 can then select another region of the subset of regions 220 and 222 based on the current output of the power converter 110. For example, the auto-tuner component 130 can select a third region 230 and divide that region into sub-regions. Then, the auto-tuner component 130 can select a fourth region 240 and divide that region into sub-regions. Each sub-region that is divided represents a different set of compensation parameters that are derived or computed from the un-divided region. The auto-tuner component 130 continues to iterate through the regions. For example, the auto-tuner component 130 can generate another region 250 that includes compensation parameters corresponding to and generated by perturbing parameters of the region 220. After the auto-tuner component 130 completes iterating through all the regions, a final output 260 is generated and used to select the compensation parameters associated with a particular region. These compensation parameters can then be used to operate the power converter 110.

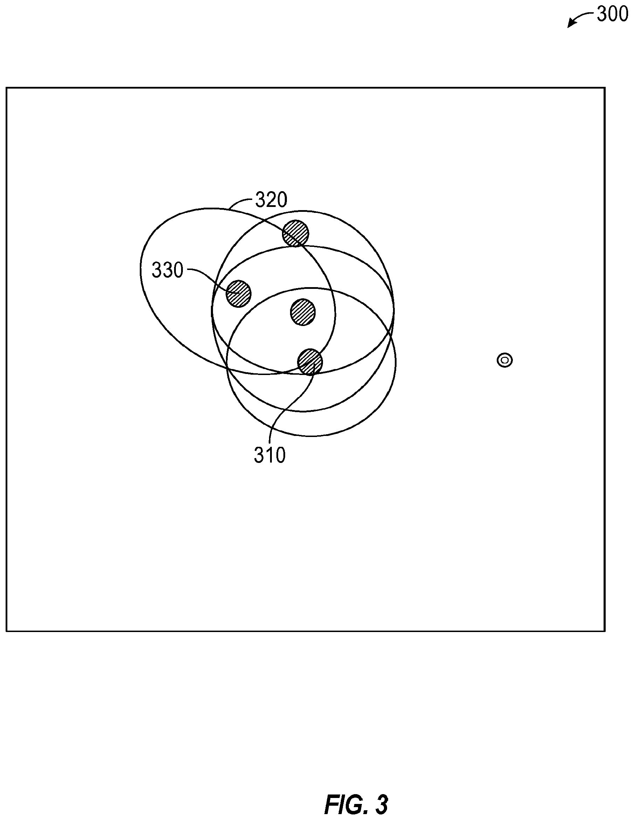

**FIG. 3** is a block diagram 300 of an illustration of solving an optimization function according to hill climbing optimization, in accordance with various examples. The hill climbing optimization involves a local search algorithm that continuously moves towards the direction of increasing elevation or improvement to find the peak of the mountain or the optimal solution to the problem. It starts with a random solution and iteratively makes small changes to the solution, keeping the changes that result in improvement. These small changes correspond to applying modifications to a current set of compensation parameters of the 110 of FIG. 1.

The auto-tuner component 130 of FIG 1 creates a set of "neighbor" solutions by making small adjustments to one or more of the compensation parameters. The size of these adjustments needs to be carefully chosen to balance the exploration of the solution space and the precision of the optimization. The auto-tuner component 130 uses the objective function to evaluate the performance of each neighbor solution. If any of the neighbors perform better than the current solution (according to the objective function), the auto-tuner component 130 moves to the best-performing neighbor. This becomes the new current solution corresponding to a new set of compensation parameters. The auto-tuner component 130 repeats the iterative improvement process until no further improvements can be found or another termination condition is met, such as reaching a maximum number of iterations or a satisfactory performance level. Hill Climbing Optimization is straightforward to implement and can be effective for problems where the solution space is relatively smooth, and the optimal solution is near the initial guess. However, the algorithm may converge to a local maximum rather than the global maximum, especially in solution spaces that are complex or have many local maxima. To mitigate this, variations of the hill climbing algorithm, such as Simulated Annealing or Random Restart Hill Climbing, can be used.

Specifically, the auto-tuner component 130 can access or receive a current set of compensation parameters of the power converter 110. The auto-tuner component 130 can determine that the current set of compensation parameters 310 (shown by the large dot) is in a set of possible compensation parameter regions. The auto-tuner component 130 can identify a group of compensation parameters that are within a threshold distance of the current set of compensation parameters 310. The auto-tuner component 130 can select a particular set of compensation parameters 330 that are within the identified group.

The auto-tuner component 130 can instruct the controller 140 of FIG. 1 to reconfigure the power converter 110 to operate according to the particular set of compensation parameters 330. The auto-tuner component 130 can receive the output of the power converter 110 operating according to the new set of compensation parameters. The auto-tuner component 130 can then generate a second group of compensation parameters 320. The second group of compensation parameters 320 represents compensation parameters that are generated by adjusting the particular set of compensation parameters 330 by a range of amounts. For example, the second group of compensation parameters 320 can represent different sets of compensation parameters that are computed by applying a minimum adjustment to the particular set of compensation parameters 330 and a maximum adjustment to the particular set of compensation parameters 330.

The auto-tuner component 130 can select an additional set of compensation parameters from the second group of compensation parameters 320. The auto-tuner component 130 can instruct the controller 140 to reconfigure the power converter 110 to operate according to the particular set of compensation parameters 330. After the auto-tuner component 130 completes iterating through all the regions, a final output is generated and used to select the compensation parameters. These compensation parameters can then be used to operate the power converter 110.

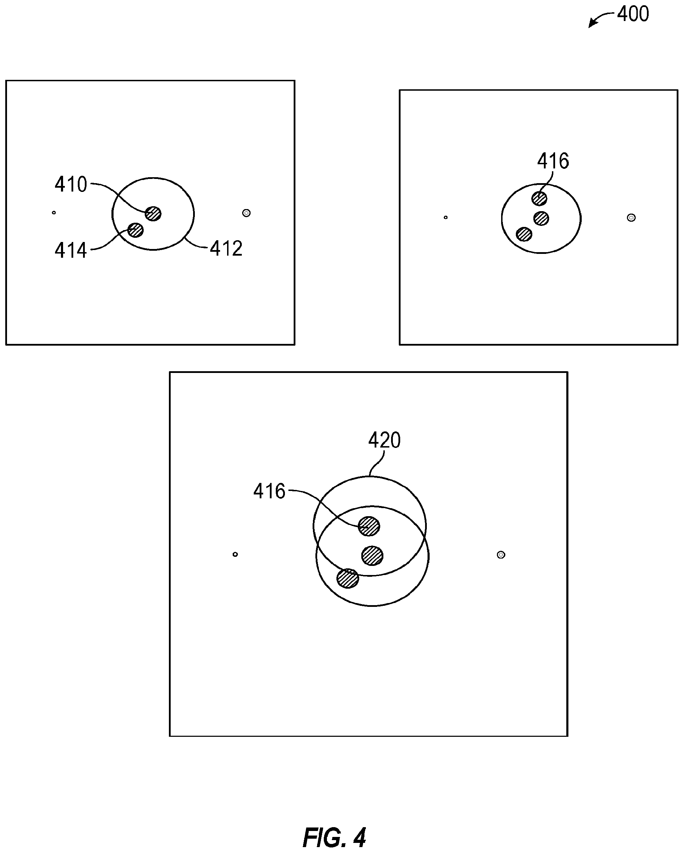

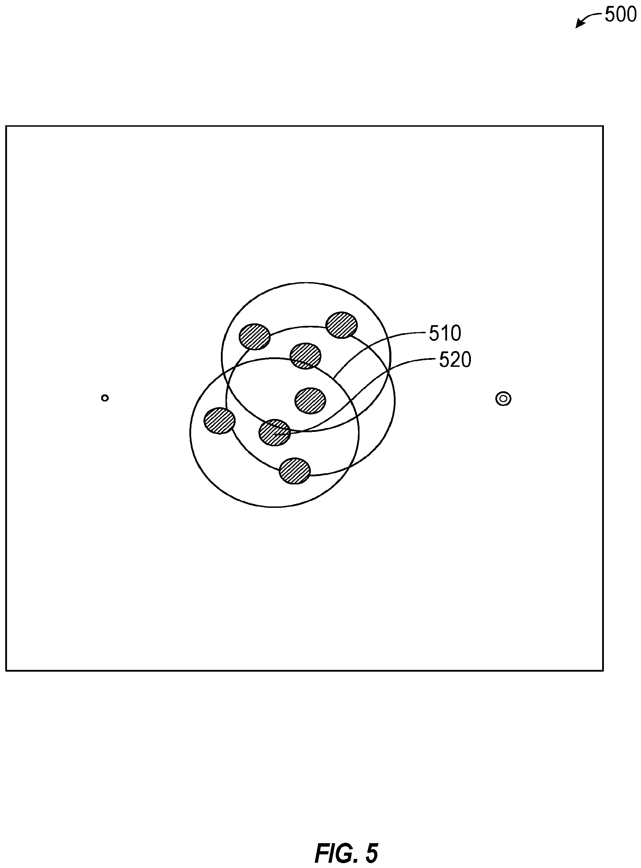

**FIGS. 4-5** are block diagrams 400 and 500 of an illustration of solving an optimization function according to Greedy Random Walk (GRW) optimization, in accordance with various examples. As shown in diagram 400, the auto-tuner component 130 of FIG. 1 may access a current set of compensation parameters used to generate a current output of the power converter 110 of FIG. 1. This may be done by accessing a local memory that stores configuration information for the power converter 110 and associates different compensation parameter sets with the respective outputs of the power converter 110.

The auto-tuner component 130 can determine that the current set of compensation parameters corresponds to a first point 410 on a global or all possible set of points. The auto-tuner component 130 can then generate a region 412 that represents a group of possible sets of compensation parameters that are within a specified threshold distance or difference from the first point 410. To do so, the auto-tuner component 130 sets a maximum adjustment value and modifies the set of compensation parameters corresponding to the first point 410 by the maximum adjustment value. This creates the outermost bounds for the region 412 for the group of possible sets of compensation parameters which can be representing by a circular region or other shape. The auto-tuner component 130 then generates multiple other sets of compensation parameters by reducing the maximum adjustment value by different steps and amounts and modifying the set of compensation parameters corresponding to the first point 410 by the adjusted maximum adjustment value. This forms an entire region of possible sets of compensation parameters that the auto-tuner component 130 can select from to test operations of the power converter 110 against the objectives of the objective function.

The auto-tuner component 130 can select a second point 414 randomly or pseudo randomly from within the region of possible sets of compensation parameters. The auto-tuner component 130 can store a second set of compensation parameters corresponding to the second point 414 in a memory or database. The auto-tuner component 130 can then instruct the controller 140 to configure the power converter 110 to operate according to the second set of compensation parameters. The auto-tuner component 130 can monitor the output of the power converter 110 via the metrics extraction component 120. The auto-tuner component 130 can store the output in association with the second set of compensation parameters in the memory.

The auto-tuner component 130 can compare the output associated with the second set of compensation parameters stored in the memory with the output associated with the first set of compensation parameters corresponding to the first point 410. The auto-tuner component 130 can determine or compute a deviation between each output and one or more objectives. The auto-tuner component 130 can compare the deviations to determine which one of the sets of compensation parameters is better. In some examples, the auto-tuner component 130 selects the set of compensation parameters corresponding to a smaller deviation between the output and one or more objectives.

In some cases, the auto-tuner component 130 selects a third point 416 randomly or pseudo randomly from within the region of possible sets of compensation parameters associated with the first point 410. The auto-tuner component 130 can store a third set of compensation parameters corresponding to the third point 416 in a memory or database. The auto-tuner component 130 can then instruct the controller 140 to configure the power converter 110 to operate according to the third set of compensation parameters. The auto-tuner component 130 can monitor the output of the power converter 110 via the metrics extraction component 120. The auto-tuner component 130 can store the output in association with the third set of compensation parameters in the memory.

The auto-tuner component 130 can compare the output associated with the third set of compensation parameters stored in the memory with the output associated with the first and/or second sets of compensation parameters corresponding to the first point 410. The auto-tuner component 130 can determine or compute a deviation between each output and one or more objectives. The auto-tuner component 130 can compare the deviations to determine which one of the sets of compensation parameters is better. In some examples, the auto-tuner component 130 selects the set of compensation parameters corresponding to a smaller deviation between the output and the one or more objectives. For example, the auto-tuner component 130 can determine that the set of compensation parameters corresponding to the third point 416 is better than those corresponding to the first point 410 and/or the second point 414. **In** such cases, the auto-tuner component 130 can repeat the process of generating a selection region using the third point 416 as a basis.

Namely, the auto-tuner component 130 can then generate a region 420 that represents a group of possible sets of compensation parameters that are within a specified threshold distance or difference from the third point 416. To do so, the auto-tuner component 130 sets a maximum adjustment value and modifies the set of compensation parameters corresponding to the third point 416 by the maximum adjustment value. This creates the outermost bounds for the region 420 for the group of possible sets of compensation parameters which can be representing by a circular region or other shape. The auto-tuner component 130 then generates multiple other sets of compensation parameters by reducing the maximum adjustment value by different steps and amounts and modifying the set of compensation parameters corresponding to the third point 416 by the adjusted maximum adjustment value. This forms another entire region of possible sets of compensation parameters that the auto-tuner component 130 can select from to test operations of the power converter **110** against the objectives of the objective function.

The auto-tuner component 130 can select points randomly or pseudo randomly from within another region of possible sets of compensation parameters corresponding to the third point 416. The auto-tuner component 130 can store a fourth set of compensation parameters corresponding to the selected point in a memory or database. The auto-tuner component 130 can then instruct the controller 140 of FIG. 1 to configure the power converter 110 to operate according to the fourth set of compensation parameters. The auto-tuner component 130 can monitor the output of the power converter 110 via the metrics extraction component 120. The auto-tuner component 130 can store the output in association with the fourth set of compensation parameters in the memory. The auto-tuner component 130 compares the current output with the outputs of the power converter 110 previously stored in the memory. The auto-tuner component 130 continues iterating through various points and generating of regions around those points until a threshold is met or a stopping criterion is met.

In some cases, the auto-tuner component 130 determines that a point 520 (shown in diagram 400 of FIG. 4) corresponds to an output value of the power converter 110 that is better than one of the points computed based on the third point 416. In such cases, the auto-tuner component 130 generates a new region 510 around that point 520 and select points randomly or pseudo randomly from within that region. The auto-tuner component 130 can store a fifth set of compensation parameters corresponding to the selected point in a memory or database. The auto-tuner component 130 can then instruct the controller 140 to configure the power converter 110 to operate according to the fifth set of compensation parameters. The auto-tuner component 130 can monitor the output of the power converter 110 via the metrics extraction component 120 of FIG. 1. The auto-tuner component 130 can store the output in association with the fourth set of compensation parameters in the memory. The auto-tuner component 130 compares the current output with the outputs of the power converter 110 previously stored in the memory. The auto-tuner component 130 continues iterating through various points and generating of regions around those points until a threshold is met or a stopping criterion is met.

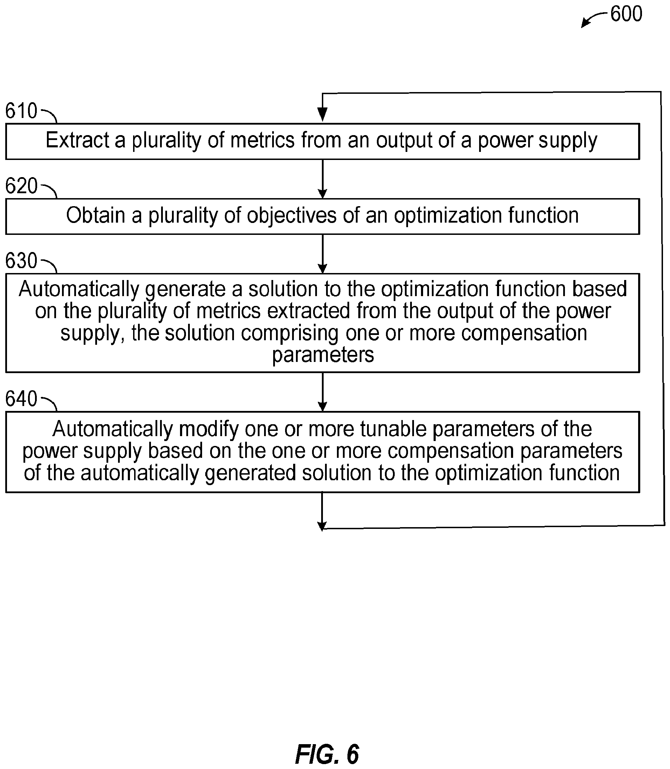

**FIG. 6** **is** a flow diagram depicting example process or method 600 for operating or configuring a power converter system, in accordance with various examples. The operations of the process or method 600 may be performed in parallel or in a different sequence or may be entirely omitted. In some examples, some or all of the operations of the process or method 600 may be embodied on a computer-readable medium and executed by one or more processors.

At operation 610, control circuitry extracts a plurality of metrics from an output of a power supply, as discussed above.

At operation 620, the control circuitry obtains a plurality of objectives and/or constraints of an optimization function, as discussed above.

At operation 630, the control circuitry automatically generates a solution to the optimization function based on the plurality of metrics extracted from the output of the power supply, the solution comprising one or more compensation parameters, as discussed above.

At operation 640, the control circuitry automatically modifies one or more tunable parameters of the power supply based on the one or more compensation parameters of the automatically generated solution to the optimization function, as discussed above.

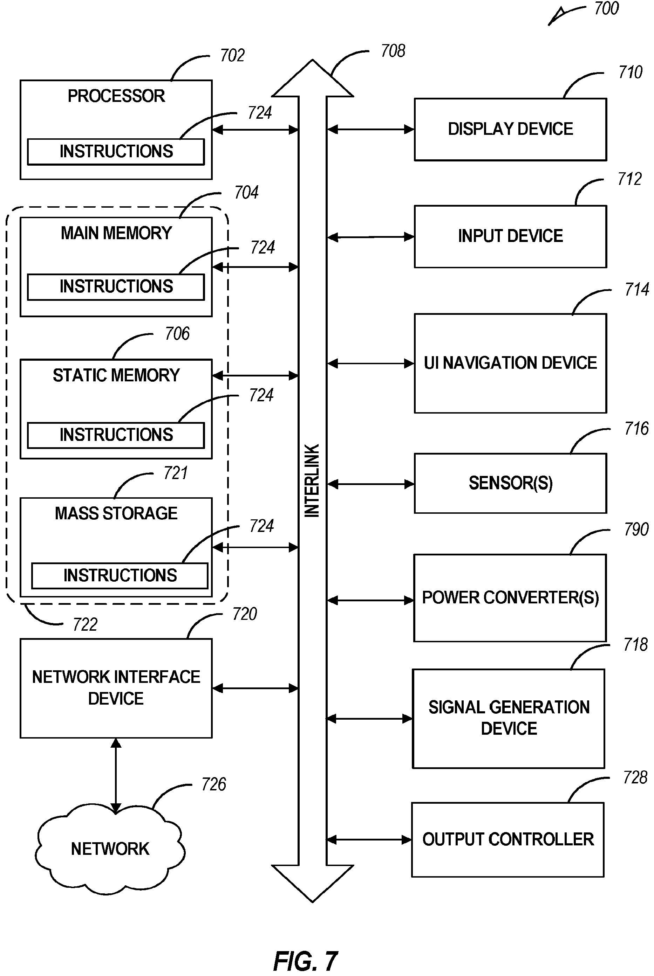

**FIG. 7** is a block diagram of an example machine 700 upon which any one or more of the techniques (e.g., methodologies) discussed herein may be performed. In alternative examples, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in a peer-to-peer (P2P) or other distributed network environment. The machine 700 may be a personal computer (PC), a tablet PC, a set-top box (STB), a personal digital assistant (PDA), a mobile telephone, a web appliance, an IoT device, an automotive system, an aerospace system, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as via cloud computing, software as a service (SaaS), or other computer cluster configurations.

Examples, as described herein, may include, or may operate by, logic, components, devices, packages, or mechanisms. Circuitry is a collection (e.g., set) of circuits implemented in tangible entities that include hardware (e.g., simple circuits, gates, logic, etc.). Circuitry membership may be flexible over time and underlying hardware variability. Circuitries include members that may, alone or in combination, perform specific tasks when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a computer-readable medium physically modified (e.g., magnetically, electrically, by moveable placement of invariant-massed particles, etc.) to encode instructions of the specific operation. In connecting the physical components, the underlying electrical properties of a hardware constituent are changed, for example, from an insulator to a conductor or vice versa. The instructions enable participating hardware (e.g., the execution units or a loading mechanism) to create members of the circuitry in hardware via the variable connections to carry out portions of the specific tasks when in operation. Accordingly, the computer-readable medium is communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry, at a different time.

The machine (e.g., computer system) 700 may include a hardware processor 702 (e.g., a central processing unit (CPU), a graphics processing unit (GPU), a hardware processor core, or any combination thereof, such as a memory controller, etc.), a main memory 704, and a static memory 706, some or all of which may communicate with each other via an interlink (e.g., bus) 708. The machine 700 may further include a display device 710, an alphanumeric input device 712 (e.g., a keyboard), and a user interface (UI) navigation device 714 (e.g., a mouse). In an example, the display device 710, alphanumeric input device 712, and UI navigation device 714 may be a touchscreen display. The machine 700 may additionally include a storage device 722 (e.g., drive unit); a signal generation device 718 (e.g., a speaker); a network interface device 720; one or more sensors 716, such as a Global Positioning System (GPS) sensor, wing sensor, mechanical device sensor, temperature sensor, bridge sensor, audio sensor, industrial sensor, a compass, an accelerometer, or other sensors; and one or more power converter(s) 790. The power converter(s) 790 may implement some or all of the functionality of the electrolyzer systems, discussed above. The machine 700 may include an output controller 728, such as a serial (e.g., universal serial bus [USB]), parallel, or other wired or wireless (e.g., infrared [IR], near field communication [NFC], etc.) connection to communicate with or control one or more peripheral devices (e.g., a printer, card reader, etc.).

The storage device 722 may include a machine-readable medium on which is stored one or more sets of data structures or instructions 724 (e.g., software) embodying or utilized by any one or more of the techniques or functions described herein. The instructions 724 may also reside, completely or at least partially, within the main memory 704, within the static memory 706, or within the hardware processor 702 during execution thereof by the machine 700. In an example, one or any combination of the hardware processor 702, the main memory 704, the static memory 706, or the storage device 722 may constitute the machine-readable medium.

While the machine-readable medium is illustrated as a single medium, the term "machine-readable medium" may include a single medium or multiple media (e.g., a centralized or distributed database, or associated caches and servers) configured to store the one or more instructions 724.

The term "machine-readable medium" may include any transitory or non-transitory medium that is capable of storing, encoding, or carrying transitory or non-transitory instructions for execution by the machine 700 and that cause the machine 700 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium comprises a machine-readable medium with a plurality of particles having invariant (e.g., rest) mass. Accordingly, massed machine-readable media are not transitory propagating signals. Specific examples of massed machine-readable media may include non-volatile memory, such as semiconductor memory devices (e.g., Electrically Programmable Read-Only Memory [EPROM], Electrically Erasable Programmable Read-Only Memory [EEPROM]) and flash memory devices; magnetic disks, such as internal hard disks and removable disks; magneto-optical disks; and CD-ROM and DVD-ROM disks.

The instructions 724 (e.g., software, programs, an operating system [OS], etc.) or other data that are stored on the storage device 721 can be accessed by the main memory 704 for use by the hardware processor 702. The main memory 704 (e.g., DRAM) is typically fast, but volatile, and thus a different type of storage from the storage device 721 (e.g., an SSD), which is suitable for long-term storage, including while in an "off" condition. The instructions 724 or data in use by a user or the machine 700 are typically loaded in the main memory 704 for use by the hardware processor 702. When the main memory 704 is full, virtual space from the storage device 721 can be allocated to supplement the main memory 704; however, because the storage device 721 is typically slower than the main memory 704, and write speeds are typically at least twice as slow as read speeds, use of virtual memory can greatly reduce user experience due to storage device latency (in contrast to the main memory 704, e.g., DRAM). Further, use of the storage device 721 for virtual memory can greatly reduce the usable lifespan of the storage device 721.

The instructions 724 may further be transmitted or received over a communications network 726 using a transmission medium via the network interface device 720 utilizing any one of a number of transfer protocols (e.g., frame relay, internet protocol [IP], transmission control protocol [TCP], user datagram protocol [UDP], hypertext transfer protocol [HTTP], etc.). Example communication networks may include a local area network (LAN), a wide area network (WAN), a packet data network (e.g., the Internet), mobile telephone networks (e.g., cellular networks), Plain Old Telephone Service (POTS) networks, and wireless data networks (e.g., Institute of Electrical and Electronics Engineers [IEEE] 802.11 family of standards known as Wi-Fi^{®}, IEEE 802.16 family of standards known as WiMax^{®}, IEEE 802.15.4 family of standards, P2P networks), among others. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any tangible or intangible medium that is capable of storing, encoding, or carrying instructions for execution by the machine 700, and includes digital or analog communications signals or other tangible or intangible media to facilitate communication of such software.

Each of the non-limiting aspects or examples described herein may stand on its own or may be combined in various combinations with one or more of the other examples.

The above detailed description includes references to the accompanying drawings, which form a part of the detailed description. The drawings show, by way of illustration, specific examples in which the inventive subject matter may be practiced. These examples are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

**In** this document, the terms "a" or "an" are used, as is common in patent documents, to include one or more than one, independent of any other instances or usages of "at least one" or "one or more." **In** this document, the term "or" is used to refer to a nonexclusive or, such that "A or B" includes "A but not B," "B but not A," and "A and B," unless otherwise indicated. **In** this document, the terms "including" and "in which" are used as the plain-English equivalents of the respective terms "comprising" and "wherein." Also, in the following aspects, the terms "including" and "comprising" are open-ended; that is, a system, device, article, composition, formulation, or process that includes elements in addition to those listed after such a term in an aspect are still deemed to fall within the scope of that aspect. Moreover, in the following aspects, the terms "first," "second," "third," and so forth are used merely as labels and are not intended to impose numerical requirements on their objects.

Method examples described herein may be machine or computer implemented at least in part. Some examples may include a computer-readable medium or machine-readable medium encoded with transitory or non-transitory instructions operable to configure an electronic device to perform methods as described in the above examples. An implementation of such methods may include code, such as microcode, assembly-language code, a higher-level-language code, or the like. Such code may include transitory or non-transitory computer-readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact discs and digital video discs), magnetic cassettes, memory cards or sticks, random access memories (RAMs), read-only memories (ROMs), and the like.

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the listed claims. Also, in the above detailed description, various features may be grouped together to streamline the disclosure. This should not be interpreted as intending that a disclosed feature not listed in the list of claims is essential to any claim. Rather, inventive subject matter may lie in less than all features of a particular disclosed example. Thus, the following claims are hereby incorporated into the detailed description as examples, with each claim standing on its own as a separate example, and it is contemplated that such examples may be combined with each other in various combinations or permutations. The scope of the inventive subject matter should be determined with reference to the appended claims, along with the full scope of equivalents to which such claims are entitled.

### Numbered aspects

By way of non-limiting example, some aspects of the disclosure are set out in the following numbered clauses.
Numbered Clause 1. A power converter system comprising:
   a power supply comprising a plurality of tunable parameters;
   control circuitry configured to perform operations further comprising:
      extracting a plurality of metrics from an output of the power supply;
      obtaining a plurality of objectives of an optimization function;
      automatically generating a solution to the optimization function based on the plurality of metrics extracted from the output of the power supply, the solution comprising one or more compensation parameters; and
      automatically modifying the plurality of tunable parameters of the power supply based on the one or more compensation parameters of the automatically generated solution to the optimization function.
Numbered Clause 2. The power converter system of Numbered Clause **1,** wherein an individual objective of the plurality of objectives of the optimization function comprises safety parameters.
Numbered Clause 3. The power converter system of Numbered Clause 2, wherein the solution to the optimization function excludes a set of values for a set of compensation parameters that cause damage to the power supply.
Numbered Clause 4. The power converter system of any preceding Numbered Clause, wherein the plurality of metrics includes at least one of a minimum voltage excursion, a gain bandwidth, a phase margin, or a gain margin.
Numbered Clause 5. The power converter system of any preceding Numbered Clause, wherein the plurality of metrics is extracted from a Bode plot associated with the power supply.
Numbered Clause 6. The power converter system of Numbered Clause 5, wherein the plurality of metrics is extracted from a voltage transient response associated with the power supply.
Numbered Clause 7. The power converter system of any preceding Numbered Clause, wherein the plurality of objectives comprises at least one of a target output voltage, a target overshoot amount, a target undershoot amount, a target transient response, target gain bandwidth, or a target phase margin.
Numbered Clause 8. The power converter system of any preceding Numbered Clause, wherein the plurality of tunable parameters of the power supply correspond to a stable operating region of the power supply, and wherein the plurality of metrics is extracted while the power supply operates in the stable operating region.
Numbered Clause 9. The power converter system of any preceding Numbered Clause, wherein a first of the plurality of tunable parameters comprises a first type of value, and wherein a second of the plurality of tunable parameters comprises a second type of value.
Numbered Clause 10. The power converter system of Numbered Clause 9, wherein the operations comprise generating a first list of possible values corresponding to the first type of value and generating a second list of possible values corresponding to the second type of value.
Numbered Clause 11. The power converter system of Numbered Clause 9 or 10, wherein the first type of value comprises a string, and wherein the second type of value comprises a Boolean, floating point, or integer value.
Numbered Clause 12. The power converter system of any preceding Numbered Clause, wherein automatically generating the solution to the optimization function comprises:
   accessing a first set of compensation parameters corresponding to a stable operating region for the power supply; and
   adjusting the first set of compensation parameters by a specified amount to generate a second set of compensation parameters.
Numbered Clause 13. The power converter system of Numbered Clause 12, wherein the operations comprise verifying whether the second set of compensation parameters satisfy the plurality of objectives of the optimization function without causing damage to the power supply.
Numbered Clause 14. The power converter system of Numbered Clause 12 or 13, wherein the output of the power supply is a first output corresponding to the first set of compensation parameters, wherein the operations comprise:
   determining that the second set of compensation parameters satisfy the plurality of objectives of the optimization function;
   in response to determining that the second set of compensation parameters satisfy the plurality of objectives of the optimization function, applying the second set of compensation parameters to the power supply;
   generating a second output of the power supply corresponding to the second set of compensation parameters; and
   determining which of the first output and the second output of the power supply is closer to a target objective of the optimization function.
Numbered Clause 15. The power converter system of Numbered Clause 14, wherein the operations comprise:
   computing a first deviation between the first output and the target objective;
   computing a second deviation between the second output and the target objective; and
   determining that the first output is closer to the target objective in response to determining that the second deviation is greater than the first deviation.
Numbered Clause 16. The power converter system of Numbered Clause 14 or 15, wherein the operations comprise:
   in response to determining that the first output is closer to the target objective, adjusting the first set of compensation parameters corresponding to the first output by a different specified amount to generate a third set of compensation parameters.
Numbered Clause 17. The power converter system of any of Numbered Clause 14 to 16, wherein the operations comprise:
   in response to determining that the second output is closer to the target objective, adjusting the second set of compensation parameters corresponding to the second output by the specified amount to generate a third set of compensation parameters.
Numbered Clause 18. The power converter system of any preceding Numbered Clause, wherein automatically generating the solution to the optimization function comprises processing the optimization function according to at least one of simultaneous optimistic optimization (SOO), greedy random walk, or hill climbing optimization.
Numbered Clause 19. A method comprising:
   extracting a plurality of metrics from an output of a power supply;
   obtaining a plurality of objectives of an optimization function;
   automatically generating a solution to the optimization function based on the plurality of metrics extracted from the output of the power supply, the solution comprising one or more compensation parameters; and
   automatically modifying one or more tunable parameters of the power supply based on the one or more compensation parameters of the automatically generated solution to the optimization function.
Numbered Clause 20. A non-transitory computer readable medium comprising computer readable instructions that, when executed by one or more processors, configure the one or more processors to perform operations comprising:
   extracting a plurality of metrics from an output of a power supply;
   obtaining a plurality of objectives of an optimization function;
   automatically generating a solution to the optimization function based on the plurality of metrics extracted from the output of the power supply, the solution comprising one or more compensation parameters; and
   automatically modifying one or more tunable parameters of the power supply based on the one or more compensation parameters of the automatically generated solution to the optimization function.

## Claims

1. A power converter system comprising:
a power supply comprising a plurality of tunable parameters;
control circuitry configured to perform operations further comprising:
extracting a plurality of metrics from an output of the power supply;
obtaining a plurality of objectives of an optimization function;
automatically generating a solution to the optimization function based on the plurality of metrics extracted from the output of the power supply, the solution comprising one or more compensation parameters; and
automatically modifying the plurality of tunable parameters of the power supply based on the one or more compensation parameters of the automatically generated solution to the optimization function.

2. The power converter system of claim **1,** wherein an individual objective of the plurality of objectives of the optimization function comprises safety parameters, preferably wherein the solution to the optimization function excludes a set of values for a set of compensation parameters that cause damage to the power supply.

3. The power converter system of claim 1 and 2, wherein the plurality of metrics includes at least one of a minimum voltage excursion, a gain bandwidth, a phase margin, or a gain margin.

4. The power converter system of any preceding claim, wherein the plurality of metrics is extracted from a Bode plot associated with the power supply, preferably wherein the plurality of metrics is extracted from a voltage transient response associated with the power supply.

5. The power converter system of any preceding claim, wherein the plurality of objectives comprises at least one of a target output voltage, a target overshoot amount, a target undershoot amount, a target transient response, target gain bandwidth, or a target phase margin.

6. The power converter system of any preceding claim, wherein the plurality of tunable parameters of the power supply correspond to a stable operating region of the power supply, and wherein the plurality of metrics is extracted while the power supply operates in the stable operating region.

7. The power converter system of any preceding claim, wherein a first of the plurality of tunable parameters comprises a first type of value, and wherein a second of the plurality of tunable parameters comprises a second type of value, preferably wherein the operations comprise generating a first list of possible values corresponding to the first type of value and generating a second list of possible values corresponding to the second type of value and/or wherein the first type of value comprises a string, and wherein the second type of value comprises a Boolean, floating point, or integer value.

8. The power converter system of any preceding claim, wherein automatically generating the solution to the optimization function comprises:
accessing a first set of compensation parameters corresponding to a stable operating region for the power supply; and
adjusting the first set of compensation parameters by a specified amount to generate a second set of compensation parameters.

9. The power converter system of claim 8, wherein the operations comprise verifying whether the second set of compensation parameters satisfy the plurality of objectives of the optimization function without causing damage to the power supply.

10. The power converter system of claim 8 or 9, wherein the output of the power supply is a first output corresponding to the first set of compensation parameters, wherein the operations comprise:
determining that the second set of compensation parameters satisfy the plurality of objectives of the optimization function;
in response to determining that the second set of compensation parameters satisfy the plurality of objectives of the optimization function, applying the second set of compensation parameters to the power supply;
generating a second output of the power supply corresponding to the second set of compensation parameters; and
determining which of the first output and the second output of the power supply is closer to a target objective of the optimization function.

11. The power converter system of claim 10, wherein the operations comprise:
computing a first deviation between the first output and the target objective;
computing a second deviation between the second output and the target objective; and
determining that the first output is closer to the target objective in response to determining that the second deviation is greater than the first deviation.

12. The power converter system of claim 10 or **11,** wherein the operations comprise:
in response to determining that the first output is closer to the target objective, adjusting the first set of compensation parameters corresponding to the first output by a different specified amount to generate a third set of compensation parameters
and/or
wherein the operations comprise:
in response to determining that the second output is closer to the target objective, adjusting the second set of compensation parameters corresponding to the second output by the specified amount to generate a third set of compensation parameters.

13. The power converter system of any preceding claim, wherein automatically generating the solution to the optimization function comprises processing the optimization function according to at least one of simultaneous optimistic optimization (SOO), greedy random walk, or hill climbing optimization.

14. A method comprising:
extracting a plurality of metrics from an output of a power supply;
obtaining a plurality of objectives of an optimization function;
automatically generating a solution to the optimization function based on the plurality of metrics extracted from the output of the power supply, the solution comprising one or more compensation parameters; and
automatically modifying one or more tunable parameters of the power supply based on the one or more compensation parameters of the automatically generated solution to the optimization function.

15. A non-transitory computer readable medium comprising computer readable instructions that, when executed by one or more processors, configure the one or more processors to perform operations comprising:
extracting a plurality of metrics from an output of a power supply;
obtaining a plurality of objectives of an optimization function;
automatically generating a solution to the optimization function based on the plurality of metrics extracted from the output of the power supply, the solution comprising one or more compensation parameters; and
automatically modifying one or more tunable parameters of the power supply based on the one or more compensation parameters of the automatically generated solution to the optimization function.
